# EUROPEAN PATENT SPECIFICATION

(11) **EP 4 228 150 B1**
(45) Date of publication and mention of the grant of the patent: **25.06.2025**
(21) Application number: 22871067.9
(22) Date of filing: 07.09.2022
(51) Int. Cl.: H02S 20/23

(54) **PHOTOVOLTAIC ROOF STRUCTURE**
FOTOVOLTAISCHE DACHSTRUKTUR
STRUCTURE DE TOIT PHOTOVOLTAÏQUE

(30) Priority: 28.12.2021 CN 202123332742 U
(43) Date of publication of application: 16.08.2023
(73) Proprietor: Hengdian Group DMEGC Magnetics Co., Ltd., Jinhua, Zhejiang 322118 (CN)
(72) Inventor: LOU, Caoxin, Jinhua, Zhejiang 322118 (CN); GUO, Shuai, Jinhua, Zhejiang 322118 (CN); WU, Yuche, Jinhua, Zhejiang 322118 (CN); WANG, Tingting, Jinhua, Zhejiang 322118 (CN)
(74) Representative: Ricker, Mathias
(86) International application number: PCT/CN2022/117479
(87) International publication number: WO 2023/124208

(56) References cited:
- CN-A- 104 320 050
- CN-A- 108 547 413
- CN-A- 108 560 839
- CN-A- 112 134 515
- US-A1- 2016 190 979
- ANONYMOUS: "Solarstromproduktion vom Ost-West-Dach", 30 August 2011 (2011-08-30), pages 1 - 1, XP093131316, Retrieved from the Internet <URL:https://web.archive.org/web/20110830150819/http:/solar-sicherheit.de:80/cgi-bin/cgiwrap/schneider/error404.pl?dir__path=energie-thueringen&file=/2010-sicherheitsfragen/ost-west-dach.htm> [retrieved on 20240214]

## Description

### TECHNICAL FIELD

The present application relates to the field of photovoltaic technologies, and for example, a photovoltaic roof structure.

### BACKGROUND

Building integrated photovoltaic is an important form of application of solar power generation in cities, and as the most important link in the building integrated photovoltaic application, a roof is the most ideal site for combining the integrated photovoltaic building application with a building. In the related art, a combination of photovoltaic modules and a roof is mostly to lay conventional photovoltaic modules directly on an original roof of the building, and such structure is cumbersome, disrupts the overall effectiveness of the building, and is poorly aesthetically pleasing. Along with the deepening of a photovoltaic technology application, a photovoltaic roof structure in which the photovoltaic modules are fused with a shed-like structure has appeared. However, the photovoltaic roof structure in the related art has a poor waterproof and sunshade (or partial light transmission) effect. On the following Internet page, a photovoltaic roof structure is disclosed:
https://web.archive.org/web/20110830150819/http:/solar-sicherheit.de:80/cgi-bin/cgiwrap/schneider/ error404.pl?dir__path=energie-thueringen&file=/2010-sicherheitsfragen/ost-west-dach.htm

### SUMMARY

The present application provides a photovoltaic roof structure, to solve an issue that a photovoltaic roof structure in the related art has a poor waterproof and sunshade effect. The present application provides the photovoltaic roof structure according to claim 1.

The present application adopts the following technical schemes.

The present application provides a photovoltaic roof structure. The photovoltaic roof structure includes a bracket, multiple photovoltaic units and multiple waterproof assemblies.

The bracket includes multiple support rods disposed in parallel.

The multiple photovoltaic units are erected on the multiple support rods and are laid along a first direction and a second direction, the first direction is perpendicular to the second direction, adjacent ones of the plurality of photovoltaic units are interconnected to form a roof structure, two ends of each of the plurality of photovoltaic units in the first direction are installed with an upper frame and a lower frame respectively, the lower frame is installed on a support rod, two adjacent lower frames abut each other, and two adjacent upper frames are hinged to each other.

Each of the multiple waterproof assemblies is disposed between two adjacent upper frames and engages with the two adjacent upper frames.

### BRIEF DESCRIPTION OF DRAWINGS

FIG. 1 is an axial side view of a photovoltaic roof structure according to embodiment one of the present application;
FIG. 2 is a structure view one of a photovoltaic roof structure according to embodiment one of the present application;
FIG. 3 is a structure view of an upper frame and a waterproof assembly according to embodiment one of the present application;
FIG. 4 is a structure view of a lower frame according to embodiment one of the present application;
FIG. 5 is a structure view two of a photovoltaic roof structure according to embodiment one of the present application;
FIG. 6 is a structure view three of a photovoltaic roof structure according to embodiment one of the present application;
FIG. 7 is a structure view of a side frame according to embodiment one of the present application;
FIG. 8 is a partial enlarged view of A of FIG. 1;
FIG. 9 is a structure view of a photovoltaic roof structure according to embodiment two of the present application; and
FIG. 10 is a structure view of a connection frame according to embodiment two of the present application.

In the drawings:
100: Support rod; 101: Gutter;
200: Photovoltaic unit;
300: Upper frame; 301: First accommodating groove; 302: First fixing portion; 303: Engagement groove; 304: First fixing member;
400: Lower frame; 401: Second accommodating groove; 402: Second fixing portion; 403: Second fixing member; 404: Shim; 405: Press block; 406: Cushion block;
500: Waterproof assembly; 501: Waterproof cover plate; 502: Engagement portion;
600: Hinge;
700: Liquid collection device; 701: Water guide groove; 702: Connection member; 703: Limit member; 704: Third fixing member;
800: Side frame; 801: First side frame; 802: Second side frame; 803: Third accommodating groove; 804: First scarfing portion; 805: Second scarfing portion;
900: Connection frame; 901: Fourth accommodating groove; 902: Overlapping portion; 903: Support assembly; 904: Third fixing portion; 905: Fourth fixing portion.

### DETAILED DESCRIPTION

The present application will be described below in conjunction with the accompanying drawings and embodiments. It should be understood that the embodiments described herein are merely illustrative of the present application. For ease of description, only part, but not all, of the structures related to the present application are shown in the drawings.

In the description of the present application, the terms "coupled", "connected", and "fixed" are to be construed broadly, for example may mean fixedly connected, detachably connected, or integrated; may mean mechanically connected or electrically connected; may mean directly connected, indirectly connected through an intermediate medium, or may mean inside connection of two elements or the interaction between two elements. The meanings of the above terms in the present application may be understood according to the actual situations by those of ordinary skill in the art.

In the present application, a first feature being "on" or "under" a second feature may include the first feature and the second feature being in direct contact, or may include the first feature and the second feature not being in direct contact but being in contact with each other through additional features therebetween. Moreover, the first feature being "on", "above" and "over" the second feature includes the first feature being directly above and obliquely above the second feature, or simply represents that the first feature is at a higher level than the second feature. The first feature being "under", "below" and "beneath" the second feature includes the first feature being directly below and obliquely below the second feature, or simply represents that the first feature is at a lower level than the second feature.

In the description of this embodiment, orientations or positional relationships of the terms "upper", "lower", "left", "right", etc. are based on the orientations or positional relationships shown in the drawings, and are merely for convenience of description and simplification of operations, and do not indicate or imply that the devices or elements referred to must have a particular orientation, and be constructed and operated in a particular orientation. Furthermore, the terms "first" and "second" are used merely to distinguish between descriptions and have no special meaning.

### Embodiment one

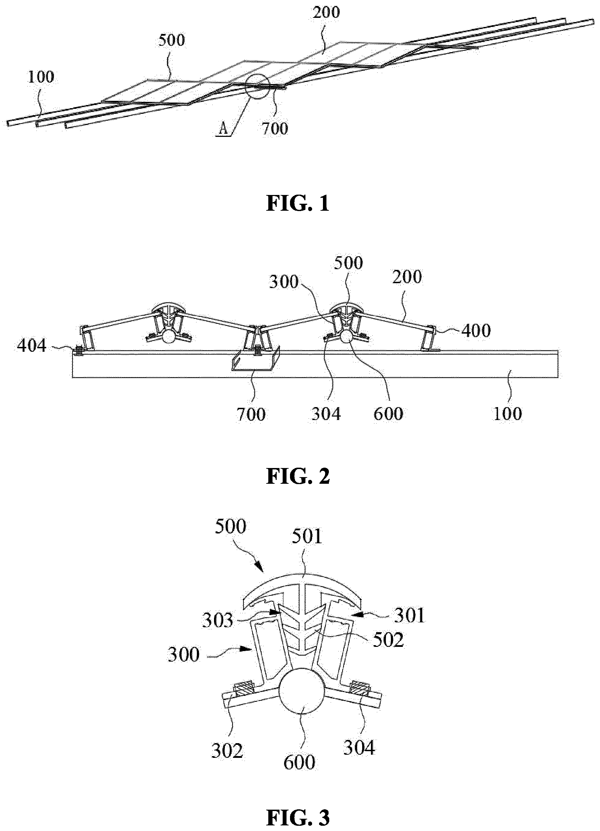

This embodiment provides a photovoltaic roof structure. As shown in FIGS. 1 and 2, the photovoltaic roof structure includes a bracket, multiple photovoltaic units 200 and multiple waterproof assemblies 500. The bracket includes multiple support rods 100 disposed in parallel. The multiple photovoltaic units are erected on the multiple support rods 100 and are laid along a first direction and a second direction. For example, the first direction is an axial direction of the support rods 100, the second direction is a direction in which the multiple support rods 100 are arranged in sequence, and the first direction is perpendicular to the second direction. Adjacent photovoltaic units among the multiple photovoltaic units are interconnected to form the roof structure, and the roof structure enables the function of sunshade and power generation. In an embodiment, two ends of each photovoltaic unit 200 in the first direction is installed with an upper frame 300 and a lower frame 400. The lower frame 400 is installed on the support rod 100, and two adjacent upper frames 300 are hinged. Each waterproof assembly 500 is disposed between two adjacent upper frames 300 and engages with the two adjacent upper frames 300. The waterproof assemblies 500 are provided so that the photovoltaic roof structure in this embodiment can realize the waterproof function. Such structure has effectively utilized the space, and the installation and disassembly are very convenient.

Optionally, two adjacent upper frames 300 are hinged by a hinge 600. The two adjacent upper frames 30 are fixed on two sides of the hinge 600, each upper frame 300 fixes one photovoltaic unit 200, and an angle between two photovoltaic units 200 fixed by the two adjacent upper frames 300 is adjustable by opening and closing of the hinge 600, so that the photovoltaic roof structure can adapt to the need for a setting angle of the photovoltaic unit 200 in different scenarios, and thus the photovoltaic roof structure is more flexibly and variably applied to scenarios.

Optionally, referring to FIGS. 2 and 3, the upper frame 300 includes a first accommodating groove 301, a first fixing portion 302 and an engagement groove 303. The first accommodating groove 301 is configured to fix the photovoltaic unit 200. The first fixing portion 302 is fixed on the hinge 600 through the first fixing member 304, so that the upper frame 300 can be rotated by a certain angle with the opening and closing of the hinge 600. The waterproof assembly 500 includes a waterproof cover plate 501 and an engagement portion 502, where the engagement portion 502 is fishbone-shaped, an end of the engagement portion 502 is connected to the waterproof cover plate 501, an inner wall of the waterproof cover plate 501 abuts against an outer wall of the first accommodating groove 301, and the engagement portion 502 engages with the engagement grooves 303 of two adjacent upper frames 300, whereby the waterproof assembly 500 is fixed between the two adjacent upper frames 300. In addition, an interference fit exists between a tail end of the fishbone-shaped engagement portion 502 and the engagement groove 303 of the upper frame 300. With such arrangement, the waterproof assembly 500 can play the role of waterproof and support the upper frames 300 on two sides, ensuring the connection reliability of the photovoltaic roof structure and featuring simple assembly structure.

Optionally, a bolt may be used as the first fixing member 304. The method of fixed connection by a bolt allows simple structure, convenient disassembly and low cost. In other embodiments, other connection member may be used as the first fixing member 304 to fix the upper frame 300.

Optionally, the waterproof assembly 500 includes fishbone-shaped engagement portions 502 of different models so as to match two upper frames 300 at different opening and closing angles. When the opening and closing angle of the hinge 600 is changed, waterproof assemblies 500 of different models can be used for replacement to ensure the cooperation of the engagement portion 502 and the engagement groove 303. In this fixing manner, the installation and disassembly of the waterproof assembly 500 is very convenient. When the setting angle of the photovoltaic unit 200 needs to be changed, it only needs to replace with a waterproof assembly 500 of an applicable model, without replacing the upper frame 300, which saves the amount of material used to manufacture the upper frame 300 and reduces the cost.

Optionally, a non-skid pattern is provided on a surface of the engagement groove 303 of the upper frame 300. The non-skid pattern is provided so that the friction between the waterproof assembly 500 and the upper frame 300 can be increased, thereby preventing the waterproof assembly 500 from falling out, and ensuring the reliability of fixing between the waterproof assembly 500 and the upper frame 300.

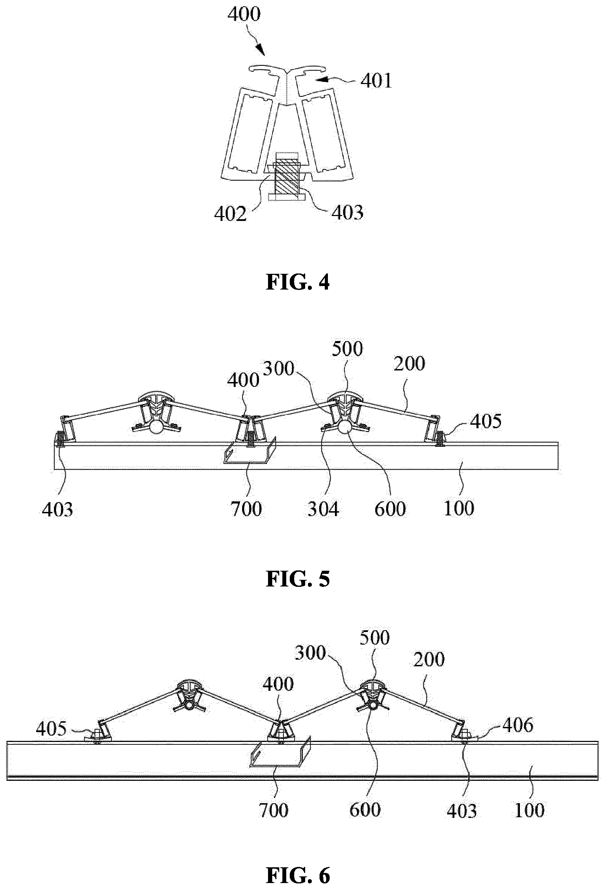

Optionally, as shown in FIGS. 2 and 4, the lower frame 400 includes a second accommodating groove 401 and a second fixing portion 402. The second accommodating groove 401 is configured to fix the photovoltaic unit 200. The second fixing portion 402 is disposed at the bottom of the lower frame 400. Second fixing portions 402 of two adjacent lower frames 400 overlap with each other, and are fixed on the support rods 100 through a second fixing member 403. Outer walls of two adjacent second accommodating grooves 401 abut against each other to form a first waterproof structure, so that with the first waterproof structure, water droplets can be prevented from flowing into the connection between two adjacent lower frames 400, thereby ensuring that the second fixing member 403 does not come into contact with water droplets as much as possible to prolong the service life of the second fixing member 403. In addition, two adjacent second fixing portions 402 are overlapped to form a second waterproof structure. The second waterproof structure is provided so that the inflow of water droplets between two adjacent lower frames 400 can be prevented, ensuring the good waterproofing effect of the photovoltaic roof structure.

Optionally, a bolt may be used as the second fixing member 403. The method of fixed connection by a bolt allows simple structure, convenient disassembly and low cost. In other embodiments, other connection member may be used as the second fixing member 403 to fix the lower frame 400.

Optionally, since the lower frame 400 at an edge lacks an adjacent lower frame 400 to overlap with each other, a shim 404 is provided at the second fixing portion 402 of the lower frame 400 at the edge to provide the support for the lower frame 400 at the edge, ensuring the fixing stability of the lower frame 400. Moreover, a lower head frame 400 of other model do not need to be additionally provided, so that the process of installation and assembling is easier.

Optionally, as shown in FIG. 5, a press block 405 is disposed above the second fixing member 403. The press block 405 can protect the second fixing member 403 and prevent water droplets or the like from coming into contact with the second fixing member 403, avoiding rusting of the second fixing member 403 and prolonging the service life of the second fixing member 403. Further, the press block 405 can support the lower frames 400 disposed on two sides, ensuring the reliability of the connection between two adjacent lower frames 400.

When the setting angle of the photovoltaic unit 200 needs to be changed, since an angle between the second fixing portion 402 of the lower frame 400 and a frame body of the lower frame 400 is fixed, lower frames 400 of different models are needed for replacement to match the setting angle of the photovoltaic unit 200, which requires preparation of many lower frames 400 of different models, resulting in waste of manpower and physical power.

To solve the above-described issue, the photovoltaic roof structure in this embodiment is provided with a cushion block 406, as shown in FIG. 6. The cushion block 406 is disposed between the lower frame 400 and the support rod 100 and is fixed on the support rod 100 through the second fixing member 403. A setting angle of an upper end surface of the shim 404 is changed so that the lower frame 400 fits snugly with the cushion block 406, whereby the fixing stability of the lower head frame 400 is ensured. In this manner, the preparation of multiple lower frames 400 of different models is avoided, and when the setting angle of the photovoltaic unit 200 needs to be changed, the lower frame 400 of a same model can be used and only different cushion blocks 406 are needed for replacement. Such configuration is flexibly applied to the scenarios, and the cushion block 406 has a small volume, is easy to be processed, and has low cost.

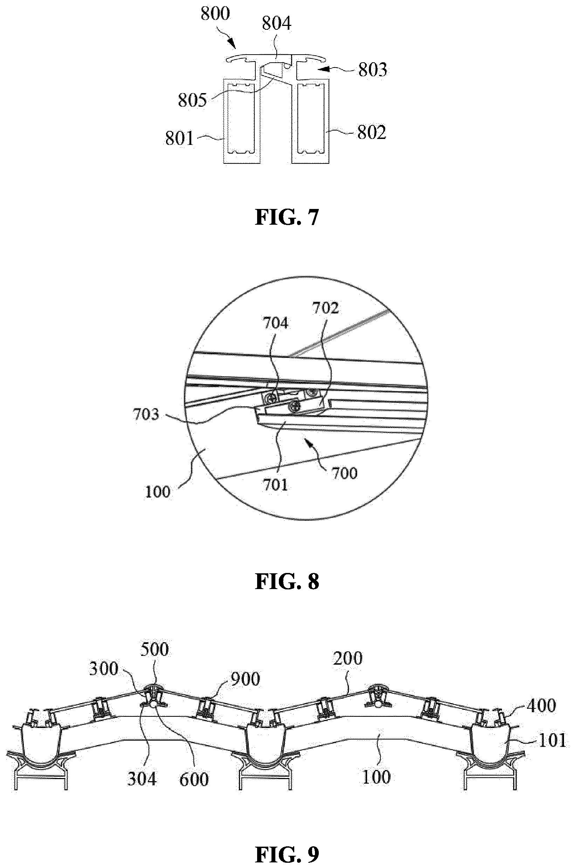

Referring to FIGS. 1 and 7, the photovoltaic roof structure in this embodiment is also laid with multiple photovoltaic units 200 in the second direction, two adjacent photovoltaic units 200 are fixed by a side frame 800 which includes a first side frame 801 and a second side frame 802. The first side frame 801 and the second side frame 802 each include a third accommodating groove 803, and the third accommodating grooves 803 are configured to fix the two adjacent photovoltaic units 200. A first scarfing portion 804 is disposed on the first side frame 801, and a second scarfing portion 805 is disposed on the second side frame 802. The first scarfing portion804 and the second scarfing portion 805 may be connected to each other in a nesting manner to ensure the reliability of the connection between the two adjacent photovoltaic units.

Referring to FIGS. 1 and 8, the photovoltaic roof structure in this embodiment further includes a liquid collection device 700 which includes a water guide groove 701, the water guide groove 701 is disposed between adjacent support rods 100 and is located directly below the lower frame 400, two ends of the water guide groove 701 are each provided with an insertion portion, the support rod 100 is provided with a hole, and the insertion portions at the two ends of the water guide groove 701 are inserted into holes of adjacent support rods 100, respectively, whereby the water guide groove 701 is fixed. Accumulated water drops can be discharged along the water guide groove 701 through the water guide groove 701, ensuring the good waterproof effect of the photovoltaic roof structure.

Optionally, the liquid collection device 700 further includes a connection member 702 and a limit member 703. The connection member 702 is fixed on the support rod 100 through a third fixing member 704, and an accommodating groove is disposed on the connection member 702. The limit member 703 is fixed within the accommodating groove through the third fixing element 704, the limit member 703 abuts against the insertion portion of the water guide groove 701 to limit the displacement of the water guide groove 701 in a third direction. The third direction is a direction perpendicular to the ground, and is perpendicular to both the first direction and the second direction. The connection member 702 and the limit member 703 are provided so that the fixing stability of the water guide groove 701 is ensured.

Optionally, a bolt may be used as the third fixing member 704. The method of fixed connection by a bolt allows simple structure, convenient disassembly and low cost. In other embodiments, other connection member may be used as the third fixing member 704 to fix the connection member 702 and the limit member 703.

The present application provides a photovoltaic roof structure which includes the bracket, the multiple photovoltaic units and the multiple waterproof assemblies. The bracket includes the multiple support rods disposed in parallel. The multiple photovoltaic units are erected on the multiple support rods and are laid along the first direction and the second direction, the adjacent photovoltaic units among the multiple photovoltaic units are interconnected to form the roof structure, the photovoltaic units disposed in the first direction are fixed through the upper frame and the lower frame, the lower frame is fixed on the support rod, two adjacent upper frames are hinged. Each waterproof assembly is disposed between two adjacent upper frames and engages with the two adjacent upper frames. The photovoltaic roof structure described above can not only achieve the effect of waterproof and sunshade, but also make effective use of the space, so that the structure is simple, and the installation and disassembly are convenient.

### Embodiment two

This embodiment further provides a photovoltaic roof structure which differs from the photovoltaic roof structure in the embodiment two in that: multiple photovoltaic units 200 are disposed between an upper frame 300 and a lower frame 400 in the photovoltaic roof structure in this embodiment. As shown in FIG. 9, the description is given by taking as an example two photovoltaic units 200 being disposed between the upper frame 300 and the lower frame 400 in this embodiment. Two photovoltaic units 200 are connected by a connection frame 900, and since an area of the single photovoltaic unit 200 is generally small, when a photovoltaic roof structure with a large area is required, two adjacent photovoltaic units 200 may be connected through the connection frame 900 so that an area of a side surface of the photovoltaic roof structure is increased to satisfy the requirement of a user. In other embodiments, other numbers of photovoltaic units 200 such as three photovoltaic units or four photovoltaic units can also be disposed between the upper frame 300 and the lower frame 400.

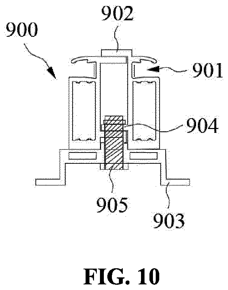

Optionally, as shown in FIG. 10, the connection frame 900 in this embodiment includes a fourth accommodating groove 901, an overlapping portion 902 and a third fixing portion 904. The fourth accommodating groove 901 can fix the photovoltaic unit 200, the third fixing portion 904 is fixed on the support rod 100, and overlapping portions 902 of two adjacent connection frames 900 overlap with each other so that the two adjacent photovoltaic units 200 are connected by the connection frame 900.

Optionally, the photovoltaic roof structure in this embodiment further includes a support assembly 903. The support assembly 903 is disposed between the connection frame 900 and the support rod 100. Exemplarily, the third fixing portion 904 of the connection frame 900 is fixed on the support assembly 903 through a fourth fixing member 905, and the support assembly 903 is fixed on the support rod 100. The support assembly 903 is configured to support the connection frame 900, so that the stability of the connection frame 900 for fixing the photovoltaic unit 200 is ensured. Optionally, the support assembly 903 may also be fixed on the support rod 100 by the fourth fixing member 905.

Optionally, a bolt may be used as the fourth fixing member 905. The method of fixed connection by a bolt allows simple structure, convenient disassembly and low cost. In other embodiments, other connection member may be used as the fourth fixing member 905 to fix the connection frame 900 and the support assembly 903.

Optionally, since a side area of the photovoltaic roof structure in this embodiment is relatively large, more water droplets are accumulated on a rainy day. Thus, with continued reference to FIG. 9, the photovoltaic roof structure in this embodiment is provided with a gutter 101, and the gutter 101 is disposed between support rods 100. Water droplets flowing down from photovoltaic unit 200 can be collected within the gutter 101, and the collected water droplets are then discharged along the gutter 101, whereby the good waterproof effect of photovoltaic roof structure is ensured.

## Claims

1. A photovoltaic roof structure, comprising:
a bracket, wherein the bracket comprises a plurality of support rods (100) disposed in parallel;
a plurality of photovoltaic units (200), wherein the plurality of photovoltaic units (200) are erected on the plurality of support rods (100) and are laid along a first direction and a second direction, the first direction is perpendicular to the second direction, adjacent ones of the plurality of photovoltaic units (200) are interconnected to form a roof structure, two ends of each of the plurality of photovoltaic units (200) in the first direction are installed with an upper frame (300) and a lower frame (400) respectively, the lower frame (400) is installed on a support rod (100), two adjacent lower frames (400) abut each other, and two adjacent upper frames (300) are hinged to each other; and
a plurality of waterproof assemblies (500), wherein each of the plurality of waterproof assemblies (500) is disposed between two adjacent upper frames (300) and engages with the two adjacent upper frames (300).

2. The photovoltaic roof structure of claim 1, wherein the two adjacent upper frames (300) are hinged to each other by a hinge (600), the two adjacent upper frames (300) are each fixed on the hinge (600), and the hinge (600) is configured so that an angle between photovoltaic units (200) fixed by the two adjacent upper frames (300) is adjustable to fit the respective one of the plurality of waterproof assemblies (500).

3. The photovoltaic roof structure of claim 2, wherein the upper frame (300) comprises a first accommodating groove (301), a first fixing portion (302) and an engagement groove (303), wherein the first accommodating groove (301) is configured to fix a respective one of the plurality of photovoltaic units (200), the first fixing portion (302) is fixed on the hinge (600), and the respective one of the plurality of waterproof assemblies (500) engages with the two adj acent upper frames (300) through the engagement groove (303).

4. The photovoltaic roof structure of claim 2, further comprising a cushion block (406) disposed between the lower frame (400) and the support rod (100).

5. The photovoltaic roof structure of claim 1, wherein the lower frame (400) comprises a second accommodating groove (401) and a second fixing portion (402), wherein the second accommodating groove (401) is configured to fix a respective one of the plurality of photovoltaic units (200), outer walls of two adjacent second accommodating grooves (401) abut each other to form a first waterproof structure, a bottom portion of the lower frame (400) is provided with the second fixing portion (402), and two adjacent second fixing portions (402) overlap to form a second waterproof structure.

6. The photovoltaic roof structure of claim 1, further comprising a liquid collection device (700), wherein the liquid collection device (700) comprises a water guide groove (701) disposed between adjacent ones of the plurality of support rods (100).

7. The photovoltaic roof structure of claim 6, wherein the adjacent ones of the plurality of support rods (100) are provided with holes, and two ends of the water guide groove (701) are inserted into the holes on the adjacent ones of the plurality of support rods (100) respectively.

8. The photovoltaic roof structure of claim 7, wherein the liquid collection device (700) further comprises a connection member (702) and a limit member (703), wherein the connection member (702) is fixed on the adjacent ones of the plurality of support rods (100), and the limit member (703) is connected to the connection member (702), the limit member (703) is configured to limit a displacement of the water guide groove (701) in a third direction, and the third direction is perpendicular to both the first direction and the second direction.

9. The photovoltaic roof structure of claim 1, wherein ones of the plurality of photovoltaic units (200) disposed in the second direction are fixed to each other through side frames (800), and two adjacent side frames (800) are connected to each other in a nesting manner.

10. The photovoltaic roof structure of claim 1, further comprising a connection frame (900) capable of connecting two adjacent ones of the plurality of photovoltaic units (200).

## Patentansprüche

1. Photovoltaik-Dachstruktur, umfassend:
eine Halterung, wobei die Halterung eine Vielzahl von parallel angeordneten Stützstangen (100) umfasst;
eine Vielzahl von Photovoltaikeinheiten (200), wobei die Vielzahl von Photovoltaikeinheiten (200) auf der Vielzahl von Stützstangen (100) errichtet und entlang einer ersten Richtung und einer zweiten Richtung verlegt sind, wobei die erste Richtung senkrecht zur zweiten Richtung verläuft, wobei benachbarte der Vielzahl von Photovoltaikeinheiten (200) miteinander verbunden sind, um eine Dachstruktur zu bilden, wobei zwei Enden jeder der Vielzahl von Photovoltaikeinheiten (200) in der ersten Richtung jeweils mit einem oberen Rahmen (300) und einem unteren Rahmen (400) ausgestattet sind, wobei der untere Rahmen (400) auf einer Stützstange (100) installiert ist, wobei zwei benachbarte untere Rahmen (400) aneinander anliegen und zwei benachbarte obere Rahmen (300) miteinander gelenkig verbunden sind; und
eine Vielzahl von wasserdichten Baugruppen (500), wobei jede der Vielzahl von wasserdichten Baugruppen (500) zwischen zwei benachbarten oberen Rahmen (300) angeordnet ist und mit diesen beiden benachbarten oberen Rahmen (300) in Eingriff steht.

2. Photovoltaik-Dachstruktur nach Anspruch 1, wobei die zwei benachbarten oberen Rahmen (300) durch ein Scharnier (600) gelenkig miteinander verbunden sind, wobei die zwei benachbarten oberen Rahmen (300) jeweils am Scharnier (600) befestigt sind, und wobei das Scharnier (600) so ausgestaltet ist, dass ein Winkel zwischen den durch die zwei benachbarten oberen Rahmen (300) fixierten Photovoltaikeinheiten (200) einstellbar ist, um die jeweilige wasserdichte Baugruppe (500) zu montieren.

3. Photovoltaik-Dachstruktur nach Anspruch 2, wobei der obere Rahmen (300) eine erste Aufnahmenut (301), einen ersten Befestigungsabschnitt (302) und eine Eingriffsnut (303) umfasst, wobei die erste Aufnahmenut (301) dazu ausgelegt ist, eine jeweilige der Vielzahl von Photovoltaikeinheiten (200) zu fixieren, wobei der erste Befestigungsabschnitt (302) am Scharnier (600) befestigt ist, und wobei die jeweilige wasserdichte Baugruppe (500) über die Eingriffsnut (303) mit den zwei benachbarten oberen Rahmen (300) in Eingriff steht.

4. Photovoltaik-Dachstruktur nach Anspruch 2, ferner umfassend einen Dämpfungsblock (406), der zwischen dem unteren Rahmen (400) und der Stützstange (100) angeordnet ist.

5. Photovoltaik-Dachstruktur nach Anspruch 1, wobei der untere Rahmen (400) eine zweite Aufnahmenut (401) und einen zweiten Befestigungsabschnitt (402) umfasst, wobei die zweite Aufnahmenut (401) zur Fixierung einer jeweiligen der Vielzahl von Photovoltaikeinheiten (200) ausgestaltet ist, wobei Außenwände von zwei benachbarten zweiten Aufnahmenuten (401) aneinander anliegen und eine erste wasserdichte Struktur bilden, wobei ein Bodenabschnitt des unteren Rahmens (400) mit dem zweiten Befestigungsabschnitt (402) versehen ist und sich zwei benachbarte zweite Befestigungsabschnitte (402) überlappen, um eine zweite wasserdichte Struktur zu bilden.

6. Photovoltaik-Dachstruktur nach Anspruch 1, ferner umfassend eine Flüssigkeitsauffangvorrichtung (700), wobei die Flüssigkeitsauffangvorrichtung (700) eine Wasserführungskammer (701) umfasst, die zwischen benachbarten der Vielzahl von Stützstangen (100) angeordnet ist.

7. Photovoltaik-Dachstruktur nach Anspruch 6, wobei die benachbarten Stützstangen (100) der Vielzahl von Stützstangen mit Bohrungen versehen sind und zwei Enden der Wasserführungskammer (701) jeweils in die Bohrungen der benachbarten Stützstangen (100) eingeführt sind.

8. Photovoltaik-Dachstruktur nach Anspruch 7, wobei die Flüssigkeitsauffangvorrichtung (700) ferner ein Verbindungselement (702) und ein Begrenzungselement (703) umfasst, wobei das Verbindungselement (702) an den benachbarten Stützstangen (100) befestigt ist und das Begrenzungselement (703) mit dem Verbindungselement (702) verbunden ist, wobei das Begrenzungselement (703) dazu ausgelegt ist, eine Verschiebung der Wasserführungskammer (701) in einer dritten Richtung zu begrenzen, und wobei die dritte Richtung senkrecht sowohl zur ersten als auch zur zweiten Richtung verläuft.

9. Photovoltaik-Dachstruktur nach Anspruch 1, wobei jene der mehreren Photovoltaikeinheiten (200), die in der zweiten Richtung angeordnet sind, durch Seitenrahmen (800) miteinander verbunden sind, und wobei zwei benachbarte Seitenrahmen (800) ineinander verschachtelt miteinander verbunden sind.

10. Photovoltaik-Dachstruktur nach Anspruch 1, ferner umfassend einen Verbindungsrahmen (900), der in der Lage ist, zwei benachbarte Photovoltaikeinheiten (200) miteinander zu verbinden.

## Revendications

1. Structure de toit photovoltaïque, comprenant :
un support, dans lequel le support comprend une pluralité de tiges de soutien (100) placées en parallèle ;
une pluralité d'unités photovoltaïques (200), dans laquelle la pluralité d'unités photovoltaïques (200) est érigée sur la pluralité de tiges de soutien (100) et est posée dans un premier sens et un deuxième sens, le premier sens est perpendiculaire au deuxième sens, les unités adjacentes de la pluralité d'unités photovoltaïques (200) sont interconnectées pour former une structure de toit, deux terminaisons de chaque unité de la pluralité d'unités photovoltaïques (200) dans le premier sens sont installées avec un cadre supérieur (300) et un cadre inférieur (400) respectivement, le cadre inférieur (400) est installé sur une tige de soutien (100), deux cadres inférieurs (400) adjacents viennent mutuellement en butée, et deux cadres supérieurs (300) adjacents sont mutuellement articulés ; et
une pluralité d'ensembles étanches à l'eau (500), dans laquelle chacun des ensembles de la pluralité d'ensembles étanches à l'eau (500) est placé entre deux cadres supérieurs (300) adjacents et vient en prise avec les deux cadres supérieurs (300) adjacents.

2. Structure de toit photovoltaïque selon la revendication 1, dans laquelle les deux cadres supérieurs (300) adjacents sont mutuellement articulés à l'aide d'une charnière (600), les deux cadres supérieurs (300) adjacents sont chacun fixés sur la charnière (600), et la charnière (600) est configurée de sorte que l'angle entre les unités photovoltaïques (200) fixé par les deux cadres supérieurs (300) adjacents est ajustable afin de correspondre avec l'ensemble respectif de la pluralité d'ensembles étanches à l'eau (500).

3. Structure de toit photovoltaïque selon la revendication 2, dans laquelle le cadre supérieur (300) comprend une première gorge de logement (301), une première partie de fixation (302) et une gorge d'engagement (303), dans laquelle la première gorge de logement (301) est configurée pour fixer l'unité respective de la pluralité d'unités photovoltaïques (200), la première partie de fixation (302) est fixée sur la charnière (600), et l'ensemble respectif de la pluralité d'ensembles étanches à l'eau (500) vient en prise avec les deux cadres supérieurs (300) adjacents via la gorge d'engagement (303).

4. Structure de toit photovoltaïque selon la revendication 2, comprenant en outre un bloc d'amortissement (406) placé entre le cadre inférieur (400) et la tige de soutien (100).

5. Structure de toit photovoltaïque selon la revendication 1, dans laquelle le cadre inférieur (400) comprend une deuxième gorge de logement (401) et une deuxième partie de fixation (402), dans laquelle la deuxième gorge de logement (401) est configurée pour fixer l'unité respective de la pluralité d'unités photovoltaïques (200), les parois externes des deux deuxièmes gorges de logement (401) adjacentes viennent mutuellement en butée pour former une première structure étanche à l'eau, la partie inférieure du cadre inférieur (400) est munie de la deuxième partie de fixation (402), et deux deuxièmes parties de fixation (402) adjacentes se chevauchent pour former une deuxième structure étanche à l'eau.

6. Structure de toit photovoltaïque selon la revendication 1, comprenant en outre un dispositif de collecte de liquides (700), dans laquelle le dispositif de collecte de liquides (700) comprend une gorge de guidage d'eau (701) placée entre deux tiges adjacentes de la pluralité de tiges de soutien (100).

7. Structure de toit photovoltaïque selon la revendication 6, dans laquelle les tiges adjacentes de la pluralité de tiges de soutien (100) sont munies de trous, et deux terminaisons de la gorge de guidage d'eau (701) sont insérées dans les trous sur les tiges adjacentes de la pluralité de tiges de soutien (100) respectivement.

8. Structure de toit photovoltaïque selon la revendication 7, dans laquelle le dispositif de collecte de liquides (700) comprend en outre un élément de raccordement (702) et un élément de limitation (703), dans laquelle l'élément de raccordement (702) est fixé sur les tiges adjacentes de la pluralité de tiges de soutien (100), et l'élément de limitation (703) est raccordé à l'élément de raccordement (702), l'élément de limitation (703) est configuré pour limiter le déplacement de la gorge de guidage d'eau (701) dans un troisième sens, et le troisième sens est perpendiculaire à la fois au premier sens et au deuxième sens.

9. Structure de toit photovoltaïque selon la revendication 1, dans laquelle plusieurs unités de la pluralité d'unités photovoltaïques (200) placées dans le deuxième sens sont mutuellement fixées via des cadres latéraux (800), et deux cadres latéraux (800) adjacents sont mutuellement raccordés de manière imbriquée.

10. Structure de toit photovoltaïque selon la revendication 1, comprenant en outre un cadre de raccordement (900) capable de raccorder deux unités adjacentes de la pluralité d'unités photovoltaïques (200).
